# EUROPEAN PATENT APPLICATION

(11) **EP 1 039 695 A1**
(43) Date of publication of application: **27.09.2000**
(21) Application number: 00200981.9
(22) Date of filing: 17.03.2000
(51) Int. Cl.: H04L 12/28, G06F 13/40

(54) **Interface card and computer provided with such an interface card**

(30) Priority: 19.03.1999 NL 1011599
(71) Applicant: No Wires Needed B.V., 3723 BG Bilthoven (NL)
(72) Inventor: Brockmann, Ronald Alexander, 3572 AX Utrecht (NL); Zwemmer, Arnoud Roderick, 3581 AE Utrecht (NL); Hoeben, Maarten, 3706 HW Zeist (NL)
(74) Representative: Van Breda, Jacobus

(57) **Abstract**

The invention relates to an interface card suitable for installation in a computer for obtaining a data connection channel with a network in which one or more computers are incorporated. The card incorporates a combination of at least: a first adaptor suitable for connecting to a wireless network; a second adaptor suitable for connecting to a wired network; and a microcontroller which, depending on the data traffic present on the first or the second adaptor, services a circuit to provide the data connection channel between the first and the second adaptor, respectively, and the computer in which the card is incorporated.

## Description

The invention relates to an interface card suitable for installation in a computer for obtaining a data connection channel with a network in which one or more other computers are incorporated.

Such an interface card is known in practice and two types have long since existed, namely a first type that serves for connecting the computer to a wireless network, and a second type for connecting the computer to a wired network. Both types have their pros and cons. The wireless network suffers the drawback of a limited bandwidth which in turn limits the data transmission rate. With the wired network much higher rates of data transmission can be achieved, up to a factor of 10 to 100 higher than in the wireless network. However, the advantage of using a wireless network is that a user can quickly connect to the network and become active, while in addition mobility and flexibility are provided which a wired network lacks. When setting up a computer network it is usual to choose one of these two types with the inherent andvantages and disadvantages.

It is the object of the invention to combine the advantages of both types of networks avoiding as much as possible the disadvantages of these types of networks.

To this end the interface card according to the invention is characterized in that the card incorporates a combination of at least: a first adaptor suitable for connecting to a wireless network; a second adaptor suitable for connecting to a wired network; and a microcontroller which, depending on the data traffic present on the first or the second adaptor, services a circuit to provide the data connection channel between the first and the second adaptor, respectively, and the computer in which the card is incorporated. In this manner the interface card, without the user being aware of it, automatically provides the most suitable data connection channel, thereby optimally meeting the requirements at any particular moment with respect to the possibilities and the needs the user may have when using the computer that is incorporated in the respective network.

Compared with the prior art, this provides the advantage that a particular link of the computer in which the card is incorporated with the respective network is ensured, and that no modifications are necessary to the computer, the software, or other network components when changing to another type of network from wireless to wired or vice versa.

This offers the possibility of extensive uniformization in the equipment of the computers incorporated in the network, while in addition an optimal distribution can be achieved between the capital outlay necessary for the installation of a wired network, and the capital outlay for the similtaneous realization of a wireless network.

Advantageously the microcontroller services at least a circuit for the provision of the data connection channel between the second adaptor and the computer in which the card is incorporated, when data traffic is present on both the first and the second adaptor. This affords the advantage, if the situation permits it, to automatically unload the wireless network by switching into the wired network of the computer in which the interface card is incorporated, thereby providing the additional advantage that the computer incorporated in the wired network is able to work at higher data transmission rates.

An embodiment of the data card that sometimes enjoys preference, is characterized in that the microcontroller services two separate data connection channels between the first and the second adaptor, respectively, and the computer in which the card is incorporated, when data traffic is present on both the first and the second adaptor. By this measure it is possible to achieve advantages that will be explained in the description below relating to a computer in which the interface card is incorporated.

The invention is also embodied in such a computer that is provided with an interface card as described above. According to the invention, said computer is characterized in that it is incorporated in a wireless local area network (LAN), wherein the first adaptor on the interface card is switched to provide the data connection channel to said LAN, and the second adaptor is switched to provide a further data connection channel to a wired network.

In this manner the computer is able to communicate simultaneously both with the wireless and the wired network. Conveniently the computer is then designed such as to be connected as access point for the wireless local area network. The other computers incorporated in the wireless local area network are then also connected with the computers incorporated in the wired network via the computer that is connected as access point.

As generally important advantage of the invention may be mentioned that, by using the interface card according to the invention it is possible to postpone the definite decision regarding the type of network, whether wireless or wired, into which the computers that are provided with such an interface card, are to be incorporated. In addition, during use on real-time basis, that is to say during data transport, and depending on the situational conditions, the interface card is capable of switching the computer's coupling with the wired network over to coupling with the wireless network and vice versa. If the microcontroller incorporated on the interface card controls effectively, the data traffic can as much as possible take place via the wired network to releave the wireless network, which will benefit the perfomance of the entire network system.

The invention finally makes it possible to flexibly implement the interoperability of wireless and wired networks, while in addition creating the possibility of saving costs when realizing the wireless network, due to the fact that computers equipped with an interface card in accordance to the invention, are capable of functioning as access point for the wireless network.

The invention will now be explained in more detail with reference to one single exemplary embodiment of a combined wireless and wired network, incorporated into which is a computer provided with the interface card according to the invention.

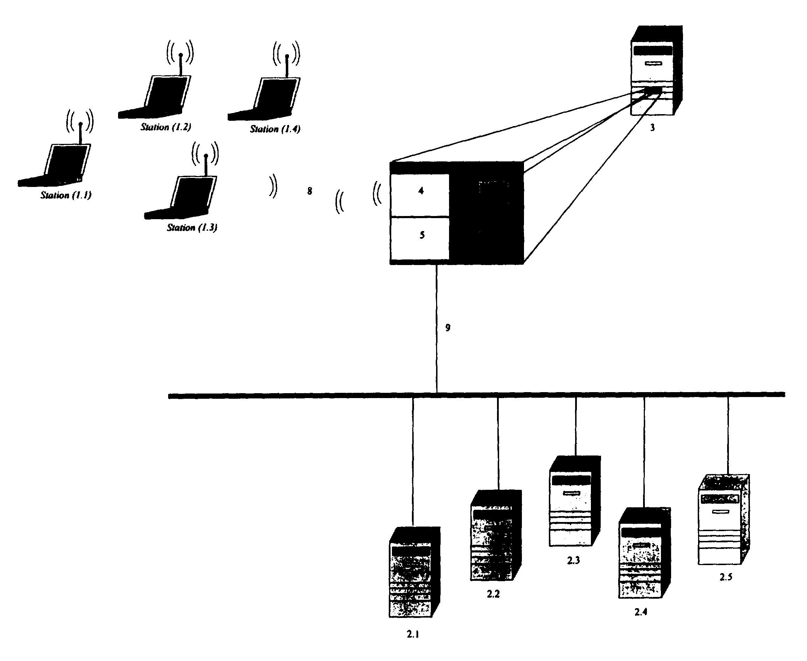

The figure represents a wireless network 1, of which computers 1.1, 1.2, 1.3 and 1.4 are components intercommunicating via the ether. The figure also shows a wired network 2, of which computers 2.1, 2.2, 2.3, 2.4 and 2.5 are components interconnected in a ringnet. Other network structures are also possible for this purpose. The figure further shows a computer 3, which is both a component of the wireless network 1 by means of a wireless connecting channel 8, and of the wired network 2 by means of a wired data connection channel 9. The wireless data connection channel 8 is connected to a first adaptor 4 which is included on an interface card 10 according to the invention. This interface card 10 is incorporated in the computer 3 and has in addition a second adaptor 5 to which the second data connection channel 9 is connected. The first or second adaptor 4, 5, communicates with the computer 3 under the control of a microcontroller 6 which is part of the interface card 10. In the configuration shown in the figure, the computer 3 functions as access point for the wireless local area network 1, and thereby provides the computers 1.1, 1.2, 1.3 and 1.4 which are part of this wireless network 1, with access to the wired network 2.

To the expert it will be obvious that the description of the exemplary embodiment is only one of the possibilities provided with the interface card according to the invention, and that the invention is not limited to this exemplary embodiment. Other variations and possible applications are also conceivable without departing from the idea of the invention defined in the appended claims which have been elucidated in the above specification.

## Claims

1. An interface card suitable for installation in a computer for obtaining a data connection channel with a network in which one or more other computers are incorporated, **characterized in that** the card incorporates a combination of at least:
- a first adaptor (4) suitable for connecting to a wireless network (1);
- a second adaptor (5) suitable for connecting to a wired network (2);
- a microcontroller (6) which,depending on the data traffic present on the first or the second adaptor, services a circuit to provide the data connection channel (8,9) between the first and the second adaptor and the computer (3) in which the card is incorporated.

2. An interface card according to claim 1, **characterized in that** the microcontroller (6) serves at least a circuit for the provision of the data connection channel (9) between the second adaptor (5) and the computer (3) in which the card is incorporated, when data traffic is present on both the first and the second adaptor.

3. An interface card according to claim 2, **characterized in that** the microcontroller (6) services two separate data connection channels (8, 9) between the first and the second adaptor, respectively, and the computer (3) in which the card is incorporated, when data traffic is present on both the first and the second adaptor.

4. A computer provided with an interface card according to one of the claims 1-3, **characterized in that** the computer is incorporated in a wireless local area network (LAN), wherein the first adaptor (4) on the interface card (10) is switched with to provide the data connection channel (8) to said LAN, and the second adaptor (5) is switched to provide a further data connection channel (9) to a wired network (2).

5. A computer according to claim 4, **characterized in that** the same is connected as access point for the wireless local area network.
